# EUROPEAN PATENT APPLICATION

(11) **EP 4 610 821 A1**
(43) Date of publication of application: **03.09.2025**
(21) Application number: 23893296.6
(22) Date of filing: 18.08.2023
(51) Int. Cl.: G06F 9/451, G06F 8/76

(54) **WINDOW ADJUSTMENT METHOD AND RELATED APPARATUS**

(30) Priority: 23.11.2022 CN 202211478806
(71) Applicant: GUANGDONG OPPO MOBILE TELECOMMUNICATIONS CORP., LTD., Dongguan, Guangdong 523860 (CN)
(72) Inventor: ZENG, Zhiling, Dongguan, Guangdong 523860 (CN); SHI, Yuanchang, Dongguan, Guangdong 523860 (CN); LI, Bing, Dongguan, Guangdong 523860 (CN)
(74) Representative: Novagraaf Technologies
(86) International application number: PCT/CN2023/113777
(87) International publication number: WO 2024/109198

(57) **Abstract**

Disclosed in the present application are a window adjustment method and a related apparatus, which are applied to electronic devices. The method comprises: in a freeform window mode, displaying P windows, each window corresponding to one window mode and at least one application, P being a positive integer, and the freeform window mode being used to be compatible with two or more window modes; selecting Q windows from amongst the P windows, Q being a positive integer less than or equal to P; determining the adjustment parameters of the Q windows, the adjustment parameters being used for adjusting one or more functions of controls of a type, or the adjustment parameters being used for adjusting one or more functions of any adjustable control in the Q windows; and, according to the adjustment parameters, adjusting the corresponding controls in the Q windows so as to obtain adjusted Q windows. The embodiments of the present application can be used for improving the adjustment efficiency and flexibility of the windows.

## Description

### TECHNICAL FIELD

The present disclosure relates to the technical field of computer technologies or the technical field of human-computer interaction technologies, in particular, to a window adjustment method and a related apparatus.

### BACKGROUND

With the widespread application of electronic devices (such as mobile phones, tablet computers, etc.), applications supported by electronic devices are increasing, and their functions are becoming increasingly powerful. Electronic devices are developing toward diversification and personalization, becoming indispensable electronic products in users' lives. In daily life, the adjustment of windows has also become an important application direction. Different windows correspond to different window modes, and adjustments can often only be made to the corresponding window under each specific window mode, resulting in low adjustment efficiency and insufficient flexibility for windows. Therefore, the problem of how to improve the adjustment efficiency and flexibility of windows is urgently to be solved.

### SUMMARY

The present disclosure provides a window adjustment method and a related apparatus to improve the efficiency and flexibility of the adjustment of a window.

In a first aspect, embodiments of the present disclosure provide a window adjustment method, applied to an electronic device and including:
displaying P windows in a free window mode, each window corresponding to one window mode and at least one application, P being a positive integer, and the free window mode being configured to be compatible with two or more window modes;
selecting Q windows from the P windows, Q being a positive integer less than or equal to P;
determining an adjustment parameter of the Q windows, the adjustment parameter being configured to adjust one or more functions of a type of control, or the adjustment parameter being configured to adjust one or more functions of any adjustable control of the Q windows;
adjusting a corresponding control of the Q windows based on the adjustment parameter to obtain adjusted Q windows.

In a second aspect, embodiments of the present disclosure provide a window adjustment apparatus, applied to an electronic device, and the apparatus including: a display unit, a selection unit, a determination unit, and an adjustment unit,
the display unit being configured to display P windows in a free window mode, each window corresponding to one window mode and at least one application, P being a positive integer, and the free window mode being configured to be compatible with two or more window modes;
the selection unit being configured to select Q windows from the P windows, Q being a positive integer less than or equal to P;
the determination unit being configured to determine an adjustment parameter of the Q windows, the adjustment parameter being configured to adjust one or more functions of a type of control, or the adjustment parameter being configured to adjust one or more functions of any adjustable control among the Q windows;
the adjustment unit being configured to adjust a corresponding control of the Q windows based on the adjustment parameter to obtain adjusted Q windows.

In a third aspect, embodiments of the present disclosure provide an electronic device, including a processor and a memory, the process being configured to store one or more programs and being configured to be executed by the processor, the one or more programs comprising an instruction for performing part or all of the operations of the method in the first aspect.

In a fourth aspect, embodiments of the present disclosure provide a computer readable storage medium, storing a computer program for electronic data exchange, wherein the computer program enables a computer to perform part or all of the operations of the method in the first aspect.

In a fifth aspect, embodiments of the present disclosure provide a computer program product, including a non-transitory computer-readable storage medium storing a computer program, wherein the computer program is operable to cause the computer to perform part or all of the operations of the method in the first aspect. The computer program product may be a software installation package.

### BRIEF DESCRIPTION OF THE DRAWINGS

To more clearly illustrate the technical solutions of the embodiments of the present disclosure, a brief introduction to the drawings used in some embodiments of the present disclosure is provided below. It is evident that the drawings described below are only some of the embodiments of the present disclosure. For those skilled in the art, additional drawings may be derived from these drawings without creative work.
FIG. 1 is a schematic structural view of an electronic device provided in some embodiments of the present disclosure.
FIG. 2 is a schematic view of a software structure of an electronic device provided in some embodiments of the present disclosure.
FIG. 3A is a schematic flowchart of a window adjustment method provided in some embodiments of the present disclosure.
FIG. 3B is a schematic view of an editing interface demonstration for implementing a window adjustment method provided in some embodiments of the present disclosure.
FIG. 3C is another schematic view of an editing interface demonstration for implementing a window adjustment method provided in some embodiments of the present disclosure.
FIG. 3D is another schematic view of an editing interface demonstration for implementing a window adjustment method provided in some embodiments of the present disclosure.
FIG. 3E is another schematic flowchart of a window adjustment method provided in some embodiments of the present disclosure.
FIG. 4 is another schematic flowchart of a window adjustment method provided in some embodiments of the present disclosure.
FIG. 5 is another schematic flowchart of a window adjustment method provided in some embodiments of the present disclosure.
FIG. 6 is a schematic structural view of an electronic device provided in some embodiments of the present disclosure.
FIG. 7 is a block diagram of a functional unit of a window adjustment apparatus provided in some embodiments of the present disclosure.

### DETAILED DESCRIPTION

In order to enable those skilled in the art to better understand the technical solutions of the present disclosure, the technical solutions in the embodiments of the present disclosure will be described below in conjunction with the accompanying drawings. It is obvious that the described embodiments are only part of the embodiments of the present disclosure and not all of them. Any other embodiments obtained based on the embodiments of the present disclosure without any creative efforts should fall within the scope of protection of the present disclosure.

It should be noted that the terms "first", "second", etc., are used merely for differentiation and should not be interpreted as indicating or implying relative importance. Additionally, the terms "including" and "having", as well as any of their variations, are intended to cover non-exclusive inclusion. For example, a process, a method, a software, a product, or a device that comprises a series of steps or units is not limited to the listed steps or units, but may also include steps or units that are not listed, or other steps or units that are inherently associated with such processes, methods, products, or devices.

In the embodiments of the present disclosure, the term "embodiment" means that specific features, structures, or characteristics described in connection with the embodiment may be included in at least one embodiment of the present disclosure. The appearances of this phrase at various places in the specification are not necessarily all referring to the same embodiment, and are not exclusive or alternative embodiments to each other. Those skilled in the art explicitly or implicitly understand that the embodiments described herein may be combined with other embodiments.

In the embodiments of the present disclosure, "and/or" describes an associative relationship between associated objects, indicating that three types of relationships may exist. For example, A and/or B may indicate the following three situations: A alone; both A and B simultaneously; or B alone. A and B may be singular or plural.

In the embodiments of the present disclosure, the symbol "/" may indicate that the associated objects before and after it are in an "or" relationship. In addition, the symbol "/" may also indicate a division sign, that is, to perform a division operation. For example, A/B may mean A divided by B.

In the embodiments of the present disclosure, the expression "at least one (item)" or similar expressions refer to any combination of these items, including any combination of a single item or multiple items, meaning one or more, where multiple means two or more. For example, at least one of a, b, or c may refer to the following seven cases: a; b; c; a and b; a and c; b and c; a, b, and c. Each of a, b, and c may be an element or a collection including one or more elements.

With the continuous development of information technology, digital virtual characters have become a hot technology in recent years. A digital virtual character simulates a human-like figure through computer graphics processing and is driven by some AI algorithms to perform simple actions so as to realize interaction between the virtual character and a human.

In specific implementations, the electronic device may include various electronic devices with display functions, for example, a handheld device (such as a smartphone, a tablet computer, etc.), a vehicle-mounted device (such as a navigator, a parking assist system, a driving recorder, a vehicle refrigerator, etc.), a wearable device (such as a smart wristband, wireless earphones, a smart watch, smart glasses, etc.), customer premise equipment (CPE), a computing device or other processing devices connected to wireless modems, as well as various forms of user equipment (UE), mobile stations (MS), virtual reality/augmented reality devices, terminal devices, etc. The electronic device may also be a base station or a server.

The electronic device may further include a smart home device, which may be at least one of a smart speaker, a smart camera, a smart rice cooker, a smart wheelchair, a smart massage chair, smart furniture, a smart dishwasher, a smart television, a smart refrigerator, a smart electric fan, a smart heater, a smart clothes drying rack, a smart lamp, a smart router, a smart switch, a smart switch panel, a smart humidifier, a smart air conditioner, a smart door, a smart window, a smart stove, a smart sterilization cabinet, a smart toilet, a sweeping robot, etc., which are not limited herein.

In the embodiments of the present disclosure, a control may be understood as an encapsulation of data and methods. A control may have its own properties and methods, wherein the properties are simple accessors of the control's data, and the methods are some simple and visible functions of the control. The process of creating a control includes design, development, and debugging (i.e., the so-called 3Ds development process: Design, Develop, Debug), followed by the use of the control. The control may include at least one of a user interface control, a chart control, a report control, a barcode control, an image processing control, a document processing control, etc., which are not limited herein.

In related technology, taking the Android system as an example, as the application scenarios of Android become more and more extensive, such as in a vehicle-mounted system and a PC scenario, existing window modes cannot adapt to the innovative multi-window service scenarios such as a vehicle-mounted system, a PC scenario, a screen projection, and a canvas embedding. In a new scenario, it is necessary to redevelop a set of window modes. The existing window modes have poor scalability and reusability.

In the embodiments of the present disclosure, based on the existing window modes of Android, the concept of scenarios (i.e., product forms) is added, and a free window implementation manner that extracts a scenario feature is proposed. Starting a specified scenario and a feature through an application, and through a combination of XML configuration of scenarios and scenario characteristics, multi-window forms under different scenarios are compatible. That is, in the embodiments of the present disclosure, a window adjustment method applied to an electronic device is provided, and the method may include the following operations.

In a free window mode, P windows are displayed, each window corresponding to one window mode and at least one application, P being a positive integer, and the free window mode being configured to be compatible with two or more window modes.

Q windows are selected from the P windows, Q being a positive integer less than or equal to P.

An adjustment parameter of the Q windows is determined, the adjustment parameter being configured to adjust one or more functions of a type of control, or the adjustment parameter being configured to adjust one or more functions of any adjustable control of the Q windows.

A corresponding control of the Q windows is adjusted based on the adjustment parameter to obtain adjusted Q windows.

In the embodiments of the present disclosure, on one hand, in the free window mode, multiple windows may be simultaneously compatible or displayed, and each window may correspond to one window mode or at least one application. On the other hand, one or more functions of a type of control in the windows, or one or more functions of any control, may be adjusted, which helps improve the efficiency and flexibility of window adjustment.

In the embodiments of the present disclosure, the free window manner distinguished by scenarios has good scalability and reusability, avoiding frequent addition of window types for different scenarios and enabling capability reuse, thus being able to handle different service scenarios. For future new service scenario requirements, based on the capability base of the free window, only a small amount of configuration and function customization is needed to meet the new service scenario requirements, which may significantly reduce development and maintenance costs.

The embodiments of the present disclosure are described in detail below.

In a first part, a software and a hardware operating environment of the technical solution disclosed in the present disclosure is introduced as follows.

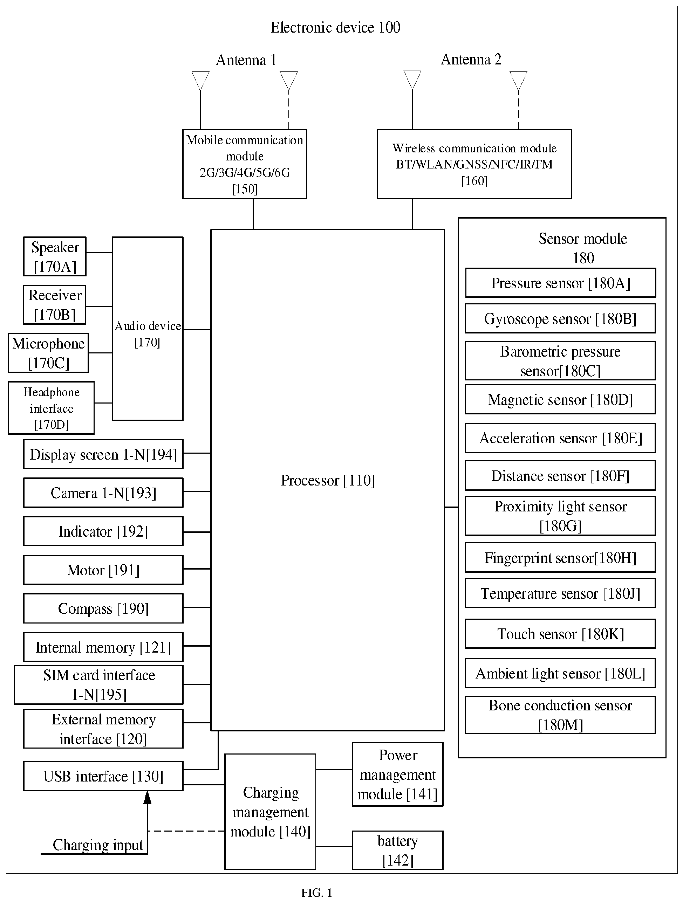

As shown in FIG. 1, FIG. 1 is a schematic structural view of an electronic device 100. The electronic device 100 may include a processor 110, an external memory interface 120, an internal memory 121, a universal serial bus (USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headphone interface 170D, a sensor module 180, a compass 190, a motor 191, an indicator 192, a camera 193, a display screen 194, and a subscriber identification module (SIM) card interface 195, etc.

It can be understood that the structure illustrated in the embodiment of the present disclosure does not constitute a specific limitation on the electronic device 100. In other embodiments of the present disclosure, the electronic device 100 may include more or fewer components than those shown in the figure, or may combine certain components, or split certain components, or adopt different component arrangements. The illustrated components may be implemented in hardware, software, or a combination of software and hardware.

The processor 110 may include one or more processing units. For example, the processor 110 may include an application processor (AP), a modem processor, a graphics processing unit (GPU), an image signal processor (ISP), a controller, a video codec, a digital signal processor (DSP), a baseband processor, and/or a neural network processor (NPU), etc. Among them, different processing units may be independent components or may be integrated into one or more processors. In some embodiments, the electronic device 100 may also include one or more processors 110. The controller may generate an operation control signal according to an instruction operation code and a timing signal, so as to complete the control of instruction fetching and instruction execution. In some other embodiments, the processor 100 may also be provided with a memory for storing an instruction or data. For example, the memory in the processor 110 may be a high-speed cache memory. The memory may store instructions or data that the processor 110 has just used or repeatedly uses. When the processor 110 needs to use the instruction or data again, it may be directly retrieved from the memory. In this way, repeated access is avoided, the waiting time of the processor 110 is reduced, and thus the efficiency of the electronic device 100 in processing data or executing instructions is improved. The processor may further include an image processor, which may be a preprocess image signal processor (Pre-ISP), and may be understood as a simplified ISP that may also perform some image processing operations, for example, to obtain image statistics information.

In some embodiments, the processor 110 may include one or more interfaces. The one or more interfaces may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a SIM card interface, and/or a USB interface, etc. The USB interface 130 is an interface that complies with a USB standard specification, and may specifically be a Mini USB interface, a Micro USB interface, a USB Type-C interface, etc. The USB interface 130 may be configured to connect a charger to charge the electronic device 100, and may also be configured for data transmission between the electronic device 100 and peripheral devices. The USB interface 130 may also be configured to connect to earphones and play audio through the earphones.

It can be understood that the interface connection relationships among the modules illustrated in the embodiment of the present disclosure are merely for illustrative description and do not constitute a structural limitation on the electronic device 100. In other embodiments of the present disclosure, the electronic device 100 may also adopt different interface connection manners from those in the above embodiments, or a combination of multiple interface connection manners.

The charging management module 140 is configured to receive charging input from a charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input through the wireless charging coil of the electronic device 100. While the charging management module 140 charges the battery 142, it may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, etc. The power management module 141 may further be configured to monitor parameters such as battery capacity, battery cycle count, and battery health status (leakage, impedance). In some other embodiments, the power management module 141 may further be provided in the processor 110. In still other embodiments, the power management module 141 and the charging management module 140 may also be provided in the same device.

A wireless communication function of the electronic device 100 may be implemented through the antenna 1, antenna 2, the mobile communication module 150, the wireless communication module 160, the modem processor, the baseband processor, etc.

The antenna 1 and antenna 2 are configured to transmit and receive electromagnetic wave signals. Each antenna in the electronic device 100 may be configured to cover a single or multiple communication frequency bands. Different antennas may also be reused to improve antenna utilization. For example, the antenna 1 may be reused as a diversity antenna for a wireless local area network. In some other embodiments, antennas may be used in combination with tuning switches.

The mobile communication module 150 may provide wireless communication solutions applied to the electronic device 100, including 2G/3G/4G/5G/6G, etc. The mobile communication module 150 may include at least one of a filter, a switch, a power amplifier, a low noise amplifier (LNA), etc. The mobile communication module 150 may receive an electromagnetic wave through antenna 1, perform processing such as filtering and amplification on the received electromagnetic wave, and transmit a processed signal to the modem processor for demodulation. The mobile communication module 150 may further amplify the signal modulated by the modem processor and convert it into electromagnetic wave radiation through antenna 1. In some embodiments, at least part of the functional modules of the mobile communication module 150 may be provided in the processor 110. In some embodiments, at least part of the functional modules of the mobile communication module 150 may be provided in the same device as at least part of the modules of the processor 110.

The wireless communication module 160 may provide wireless communication solutions applied to the electronic device 100, including wireless local area networks (WLAN) (such as wireless fidelity (Wi-Fi) networks), Bluetooth (BT), global navigation satellite system (GNSS), frequency modulation (FM), near field communication (NFC), infrared (IR), etc. The wireless communication module 160 may be one or more devices integrating at least one communication processing module. The wireless communication module 160 may receive an electromagnetic wave via antenna 2, perform frequency modulation and filtering on the electromagnetic wave signal, and send the processed signal to the processor 110. The wireless communication module 160 may further receive a signal to be transmitted from the processor 110, perform frequency modulation and amplification on the signal, and convert it into electromagnetic wave radiation via antenna 2.

The electronic device 100 implements a display function through the GPU, the display screen 194, the application processor, etc. The GPU is a microprocessor for image processing and is connected to the display screen 194 and the application processor. The GPU is configured to perform mathematical and geometric calculations for graphics rendering. The processor 110 may include one or more GPUs, which execute a program instruction to generate or modify display information.

The display screen 194 is configured to display images, videos, etc. The display screen 194 includes a display panel. The display panel may adopt one of a liquid crystal display (LCD), an organic light-emitting diode (OLED), an active-matrix organic light-emitting diode (AMOLED), a flex light-emitting diode (FLED), a mini light-emitting diode (miniled), a MicroLED, a Micro-oLED, a quantum dot light emitting diodes (QLED), etc. In some embodiments, the electronic device 100 may include one or more display screens 194.

The electronic device 100 may implement a photographing function through the ISP, the camera 193, the video codec, the GPU, the display screen 194, and the application processor, etc.

The ISP is configured to process the data fed back from the camera 193. For example, when taking a photo, the shutter is opened, and light passes through the lens and is transmitted to the photosensitive element of the camera. The light signal is converted into an electrical signal, and the photosensitive element of the camera transmits the electrical signal to the ISP for processing, converting it into an image visible to the human eye. The ISP may also perform algorithm optimization on image noise, brightness, skin tone, etc. The ISP may also optimize parameters such as exposure and color temperature of the shooting scene. In some embodiments, the ISP may be provided in the camera 193.

The camera 193 is configured to capture a static image or a video. An optical image of an object is generated through the lens and projected onto a photosensitive element. The photosensitive element may be a charge coupled device (CCD) or a complementary metal-oxide-semiconductor (CMOS) phototransistor. The photosensitive element converts the light signal into an electrical signal, and then transmits the electrical signal to the ISP to be converted into a digital image signal. The ISP outputs the digital image signal to the DSP for processing. The DSP converts the digital image signal into a standard image signal format such as RGB, YUV, etc. In some embodiments, the electronic device 100 may include one or more cameras 193.

The digital signal processor is configured to process a digital signal. In addition to processing a digital image signal, it may further process other digital signals. For example, when the electronic device 100 performs frequency selection, the digital signal processor is configured to perform a Fourier transform on the energy of the frequency point, etc.

The video codec is configured to compress or decompress digital video. The electronic device 100 may support one or more video codecs. In this way, the electronic device 100 may play or record videos in various encoding formats, for example, moving picture experts group (MPEG) 1, MPEG2, MPEG3, MPEG4, etc.

The NPU is a neural-network (NN) computing processor. By drawing on a structure of biological neural network, for example, a transmission pattern between neurons in the human brain, it may quickly process input information and may further continuously self-learn. Through the NPU, applications such as intelligent cognition of the electronic device 100 may be realized, for example: image recognition, facial recognition, speech recognition, text understanding, etc.

The external memory interface 120 may be configured to connect to an external memory card, such as a Micro SD card, to expand the storage capacity of the electronic device 100. The external memory card communicates with the processor 110 through the external memory interface 120 to implement a data storage function. For example, music, video, and other files may be stored in the external memory card.

The internal memory 121 may be configured to store one or more computer programs. The one or more computer programs includes an instruction. The processor 110 may execute the above instructions stored in the internal memory 121 to enable the electronic device 100 to perform the method for displaying page elements provided in some embodiments of the present disclosure, as well as various applications and data processing. The internal memory 121 may include a program storage area and a data storage area. The program storage area may store an operating system. It may further store one or more applications (such as gallery, contacts, etc.). The data storage area may store data created during the use of the electronic device 100 (such as photos, contacts, etc.). In addition, the internal memory 121 may include high-speed random access memory, and may further include nonvolatile memory, such as one or more disk storage components, flash memory components, universal flash storage (UFS), etc. In some embodiments, the processor 110 may enable the electronic device 100 to perform the method for displaying page elements provided in the embodiments of the present disclosure, as well as other applications and data processing, by executing the instructions stored in the internal memory 121 and/or the instructions stored in the memory provided in the processor 110. The electronic device 100 may implement an audio function through the audio module 170, the speaker 170A, the receiver 170B, the microphone 170C, the headphone interface 170D, and the application processor, etc., for example, music playback, recording, etc.

The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, etc.

The pressure sensor 180A is configured to sense a pressure signal and may convert the pressure signal into an electrical signal. In some embodiments, the pressure sensor 180A may be arranged in the display screen 194. There are many types of pressure sensors 180A, such as a resistive pressure sensor, an inductive pressure sensor, a capacitive pressure sensor, etc. The capacitive pressure sensor may include at least two parallel plates made of conductive material. When a force is applied to the pressure sensor 180A, a capacitance between electrodes changes. The electronic device 100 determines an intensity of the pressure based on the change in capacitance. When a touch operation is applied to the display screen 194, the electronic device 100 detects the intensity of the touch operation based on the pressure sensor 180A. The electronic device 100 may also calculate a touch position based on the detection signal of the pressure sensor 180A. In some embodiments, touch operations applied to the same touch position but with different touch operation intensities may correspond to different operation instructions. For example, when a touch operation with an intensity less than a first pressure threshold is applied to a short message application icon, an instruction for viewing the short message is executed. When a touch operation with an intensity greater than or equal to the first pressure threshold is applied to the short message application icon, an instruction for creating a new short message is executed.

The gyroscope sensor 180B may be configured to determine a motion posture of the electronic device 100. In some embodiments, the gyroscope sensor 180B may determine an angular velocity of the electronic device 100 around three axes (i.e., X, Y, and Z axes). The gyroscope sensor 180B may be configured for anti-shake in photography. For example, when the shutter is pressed, the gyroscope sensor 180B detects a shaking angle of the electronic device 100 and calculates a compensation distance required by the lens module based on the angle, so that the lens counteracts the shaking of the electronic device 100 through reverse movement to achieve anti-shake. The gyroscope sensor 180B may further be configured for navigation and motion-sensing game scenarios.

The acceleration sensor 180E may detect a magnitude of the acceleration of the electronic device 100 in various directions (generally three axes). When the electronic device 100 is stationary, it may detect the magnitude and a direction of gravity. It may further be configured to recognize a posture of the electronic device, and be applied in scenarios such as screen rotation and pedometer applications.

The ambient light sensor 180L is configured to sense a brightness of an ambient light. The electronic device 100 may adaptively adjust a brightness of the display screen 194 based on the brightness of the ambient light that is sensed. The ambient light sensor 180L may also be configured to automatically adjust a white balance when taking a photo. The ambient light sensor 180L may further be configured in conjunction with the proximity light sensor 180G to detect whether the electronic device 100 is in a pocket, in order to prevent an accidental touch.

The fingerprint sensor 180H is configured to collect fingerprints. The electronic device 100 may use the collected fingerprint characteristics to realize fingerprint unlocking, access to application locks, fingerprint photography, fingerprint call answering, etc.

The temperature sensor 180J is configured to detect a temperature. In some embodiments, the electronic device 100 may perform a temperature handling strategy based on the temperature detected by the temperature sensor 180J. For example, when the temperature reported by the temperature sensor 180J exceeds a threshold, the electronic device 100 reduces a performance of a processor located near the temperature sensor 180J to reduce power consumption and implement thermal protection. In other embodiments, when the temperature is lower than another threshold, the electronic device 100 heats the battery 142 to avoid abnormal shutdown of the electronic device 100 caused by low temperature. In still other embodiments, when the temperature is lower than yet another threshold, the electronic device 100 performs voltage boosting on an output voltage of the battery 142 to avoid abnormal shutdown caused by low temperature.

The touch sensor 180K, also referred to as a "touch panel", may be arranged on the display screen 194. The touch sensor 180K together with the display screen 194 forms a touch screen, also referred to as a "touch display". The touch sensor 180K is configured to detect a touch operation applied to or near it. The touch sensor may transmit the detected touch operation to the application processor to determine the type of touch event. The display screen 194 may provide visual output associated with the touch operation. In other embodiments, the touch sensor 180K may also be arranged on a surface of the electronic device 100, at a location different from the position where it is connected to the display screen 194.

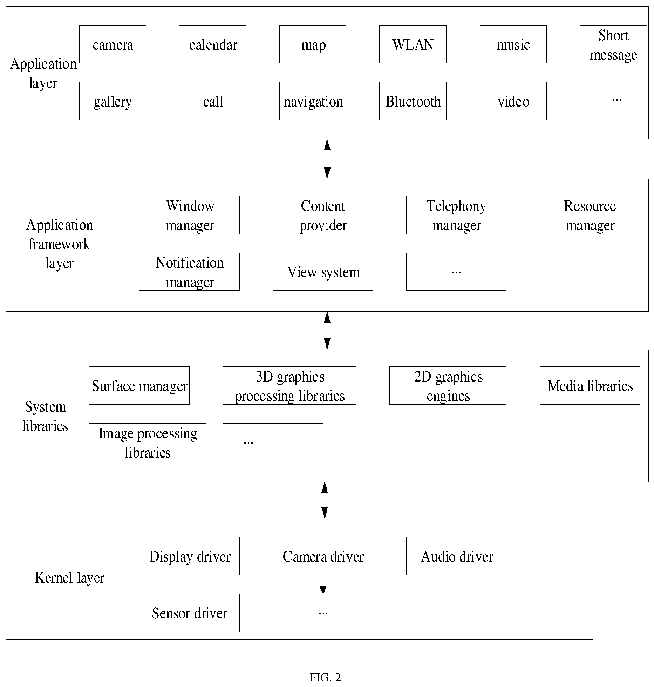

As an example, FIG. 2 is a block diagram of a software structure of the electronic device 100. A layered architecture divides the software into several layers, each having a clear role and division of responsibilities. Communication between layers is conducted through software interfaces. In some embodiments, an Android system is divided into four layers from top to bottom, i.e., an application layer, an application framework layer, Android runtime and system libraries, and a kernel layer. The application layer may include a series of application packages.

As shown in FIG. 2, the application layer may include applications such as a camera, a gallery, a calendar, a call, a map, a navigation, a WLAN, a Bluetooth, a music, a video, a short message, etc.

The application framework layer provides an application programming interfaces (API) and a programming framework for an application of the application layer. The application framework layer includes some predefined functions.

As shown in FIG. 2, the application framework layer may include a window manager, a content provider, a view system, a telephony manager, a resource manager, a notification manager, etc.

The window manager is configured to manage a window program. The window manager may obtain a size of the display screen, determine whether there is a status bar, lock the screen, capture the screen, etc.

The content provider is configured to store and acquire data, and allows the data to be accessed by the application. The data may include a video, an image, an audio, an incoming call, an outgoing call, a browsing history and a bookmark, a contact, etc.

The view system includes a visual control, such as a control for displaying text, a control for displaying images, etc. The view system may be configured to construct an application. A display interface may be composed of one or more views. For example, a display interface that includes a short message notification icon may include a view for displaying text and a view for displaying images.

The telephony manager is configured to provide a communication function for the electronic device 100, such as managing call state (including a call connection, a call disconnection, etc.).

The resource manager provides various resources for applications, such as localized strings, icons, images, layout files, video files, etc.

The notification manager allows the application to display notification information in the status bar and may be configured to convey informative messages that may automatically disappear after a short time without user interaction. For example, the notification manager may be configured to inform of a download completion, a message reminder, etc. The notification manager may further present notifications in a form of an icon or scrolling text in a status bar at a top of a system, such as notifications for background-running applications, or in a form of a dialog window appearing on the screen. For example, notifications may include text prompts in the status bar, audible alerts, vibration of the electronic device, flashing indicator lights, etc.

The Android Runtime includes a core library and a virtual machine. The Android Runtime is responsible for the scheduling and management of the Android system.

The core library includes two parts. One part includes a functional function that needs to be invoked by the Java language, and the other part includes the Android core library.

The application layer and the application framework layer run in a virtual machine. The virtual machine executes Java files of the application layer and the application framework layer as binary files. The virtual machine is configured to manage object lifecycles, stack management, thread management, security and exception handling, garbage collection, etc.

The system libraries may include multiple functional modules. For example, a surface manager, media libraries, 3D graphics processing libraries (e.g., OpenGL ES), 2D graphics engines (e.g., SGL), etc.

The surface manager is configured to manage a display subsystem and provides blending of 2D and 3D layers for multiple applications.

The media libraries support playback and recording of various commonly used audio and video formats, as well as static image files. The media libraries may support various audio and video encoding formats, such as MPEG4, H.264, MP3, AAC, AMR, JPG, PNG, etc.

The 3D graphics processing libraries are configured for implementing 3D graphics drawing, image rendering, compositing, and layer processing.

A 2D graphics engine is a drawing engine for 2D drawing.

The kernel layer is a layer between hardware and software. The kernel layer includes at least a display driver, a camera driver, an audio driver, and a sensor driver.

In a second part, the window adjustment method and related apparatus provided in the embodiments of the present disclosure are introduced as follows.

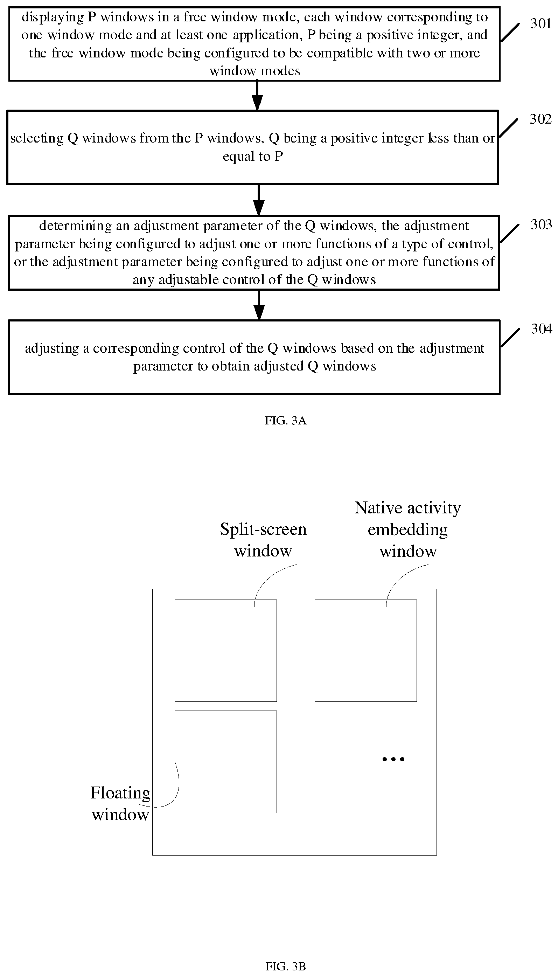

As shown in FIG. 3A, FIG. 3A is a window adjustment method provided in some embodiments of the present disclosure, which is applied to the electronic device as shown in FIG. 1 or FIG. 2. The window adjustment method may include operations executed by the following blocks.

At block 301, in a free window mode, P windows are displayed, each window corresponding to one window mode and at least one application, P being a positive integer, and the free window mode being configured to be compatible with two or more window modes.

In the embodiment of the present disclosure, the free window mode (can be freely resized) may be configured to be compatible with two or more window modes. In practical application, a free window mode compatible with multiple window modes may be provided based on product form (business scenario). In the free window mode, it is possible to display a window of one window mode, or to display windows of two or more window modes.

In specific implementation, a window editing application may be started first, and then the free window mode may be selected based on the window editing application, thereby entering the free window mode. In practical application, a threshold value for a number of allowed display windows may be set, that is, if a number of windows selected by the user is greater than the threshold value, the display may be rejected, or the windows selected by the user that are less than or equal to the threshold value may be displayed.

The window modes may include at least one of a floating window mode, a split-screen mode, a native activity embedding mode, a full-screen window mode (FULLSCREEN), a picture-in-picture window mode (Always visible, PIP), a free window mode, a multi-window mode (MULTI WINDOW), etc., which are not limited herein.

In specific implementation, all of the P windows may be displayed in the free window mode, or the P windows may be displayed in batches in the free window mode. P is a positive integer, that is, P may be 1, or P may be an integer greater than 1. When P is greater than 1, there may be partial overlapping areas between the P windows, or there may be no overlapping areas at all. For example, each of the P windows may be independently and completely displayed in its own area. For example, in one scenario, multiple window modes such as the floating window, the split-screen, and the native activity embedding may be displayed simultaneously. For example, as shown in FIG. 3B, FIG. 3B may display a native activity embedding window, a split-screen window, a floating window, etc. The native activity embedding window corresponds to the native activity embedding mode, the split-screen window corresponds to the split-screen mode, and the floating window corresponds to the floating window mode.

Each window corresponds to one window mode and at least one application. The applications corresponding to different windows may be the same or different. For example, a window A may correspond to an application A, and a window B may correspond to an application B. As another example, a window A may correspond to an application A, and a window B may also correspond to the application A. As another example, a window A may correspond to an application A, and a window B may correspond to a cloned or associated application of the application A. As another example, a window A may correspond to two applications. If the window A is in split-screen window mode (dual split-screen), the two areas of the split screen may correspond to the application A and an application B respectively.

In specific implementation, a window editing application may be started, and the free window mode may be entered through the window editing application. In the free window mode, P windows are displayed, that is, multiple windows in different window modes may be displayed on a single editing page, which is beneficial for editing these windows simultaneously without switching between windows, thereby improving the efficiency of window editing.

At block 302, Q windows are selected from the P windows, Q being a positive integer less than or equal to P.

In the embodiments of the present disclosure, the Q windows are part or all of the P windows. In specific implementation, when one window is selected, that one window may be edited. When multiple windows are selected, multiple windows may be batch edited, which helps to improve the efficiency of window editing.

In specific implementation, Q windows may be selected from the P windows, where Q is a positive integer less than or equal to P. In some embodiments, the Q windows may be selected from the P windows through a touch operation.

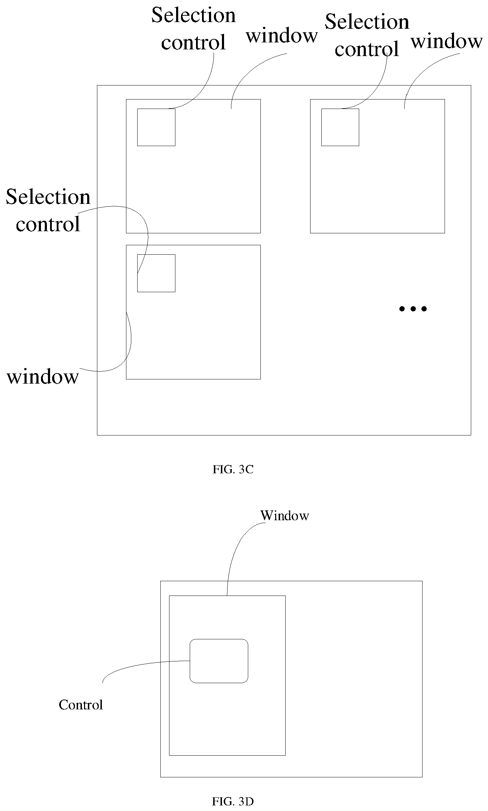

As an example, as shown in FIG. 3C, FIG. 3C may include multiple windows, and each window may be provided with a selection control. By performing a selection operation on the selection control, when any selection control is selected, the window corresponding to the selection control may be considered as selected.

In some embodiments, in the above block 302, selecting Q windows from the P windows may include operations executed by the following blocks.

At block 21, a touch parameter for the Q windows in the P windows is received within a preset time period.

At block 22, whether the touch parameter meets a preset condition is detected.

At block 23, in a case where the touch parameter meets the preset condition, the Q windows in the P windows are determined.

In the embodiments of the present disclosure, the preset time period may be set in advance or be a system default. The preset condition may also be set in advance or be a system default.

In specific implementation, within the preset time period, a touch parameter for the Q windows in the P windows may be received. The touch parameter may include a touch parameter for one window, or may include a touch parameter for two or more windows.

The touch parameter may include at least one of a touch pressure, a touch duration, a touch position, a touch area, a number of touches, a touch trajectory, etc., which are not limited herein.

Further, whether the touch parameter meets the preset condition may be detected, that is, the touch parameter may be compared with a preset touch parameter. When a comparison between the touch parameter and the preset touch parameter is successful, it may be determined that the touch parameter meets the preset condition. Conversely, when the comparison fails, it may be determined that the touch parameter does not meet the preset condition. When the touch parameter meets the preset condition, the Q windows in the P windows may be determined. The preset touch parameter may also be set in advance or be a system default, and may include at least one of a touch pressure, a touch duration, a touch position, a touch area, a number of touches, a touch trajectory, etc., which are not limited herein.

At block 303, an adjustment parameter of the Q windows is determined, the adjustment parameter being configured to adjust one or more functions of a type of control, or the adjustment parameter being configured to adjust one or more functions of any adjustable control of the Q windows.

In specific implementation, each window of the Q windows may include a control that is adjustable (adjustable control) and a control that is not adjustable (non-adjustable control).

The adjustment parameter may be configured to adjust one or more functions of a type of control, thereby enabling batch adjustment across windows or cross-window adjustment. Alternatively, the adjustment parameter may be configured to adjust one or more functions of any adjustable control in the Q windows, thereby enabling personalized adjustment for a specific window.

The functions of the controls may be configured to describe an attribute of the control. The functions of the controls may include at least one of a font size adjustment function, a display color adjustment function, a control position adjustment function, a top-pinning adjustment function, whether dragging is allowed, a zoom function, an embedding function, a display frame size adjustment function of the control, a window mode switching function, etc., which are not limited herein.

In some embodiments, in the above block 303, determining the adjustment parameter of the Q windows may include operations executed by the following blocks.

At block A31, a target control of the Q windows is selected, where the target control is any adjustable control of the Q windows.

At block A32, the target control is adjusted to an editing state.

At block A33, an adjustment parameter of the target control is determined.

In the embodiments of the present disclosure, a target control of the Q windows may be selected by performing a touch operation on any adjustable control of the Q windows. The target control may be set to an editing state. In specific implementation, a touch operation may be performed on the target control to generate a corresponding adjustment parameter, or the adjustment parameter may also be preset or system default.

In some embodiments, in the above step A33, determining the adjustment parameter of the target control may include operations executed by the following blocks.

At block A331, a target drag parameter for the target control is determined.

At block A332, an adjustment parameter of the target control corresponding to the target drag parameter is determined.

In the embodiments of the present disclosure, a drag operation may be performed on the target control to generate a corresponding target drag parameter. The target drag parameter may include at least one of a drag direction, a drag displacement, a drag distance, a drag amplitude, a drag duration, a drag trajectory, a drag endpoint, etc., which are not limited herein.

In the embodiments of the present disclosure, a mapping relationship between the preset drag parameter and the adjustment parameter may also be stored in advance. Accordingly, the adjustment parameter corresponding to the target drag parameter may be determined based on the mapping relationship. The drag parameter may include at least one of a drag direction, a drag displacement, a drag distance, a drag amplitude, a drag duration, a drag trajectory, a drag endpoint, etc., which are not limited herein. Based on the drag operation, a corresponding adjustment parameter may be generated, which helps improve the flexibility of window adjustment.

In some embodiments, in the above block 303, determining the adjustment parameter of the Q windows may include operations executed by the following blocks.

At block B31, controls in the Q windows are classified to obtain m types of controls.

At block B32, an i-th type of control is selected from the m types of controls, the i-th type of control being any type among the m types of controls.

At block B33, an adjustment parameter of the i-th type of control is determined.

In the embodiments of the present disclosure, different controls in the Q windows may be classified to obtain m types of controls, where m is an integer greater than or equal to 1. The m types of controls may further be displayed, and a user may select one type of control from the m types of controls. For example, the user may select the i-th type of control, which is any type among the m types of controls, and then determine the adjustment parameter of the i-th type of control. Each type of control may correspond to a category label. Each type of control may be represented by any control in that category, and the control used to represent a certain type of control may be referred to as a category control.

As an example, as shown in FIG. 3D, an outline of a control in a window may be adjusted to have rounded corners.

In specific implementation, a touch operation may be performed on the category control to generate a corresponding adjustment parameter, or the adjustment parameter may be preset or system default.

In some embodiments, in the above block B33, determining the adjustment parameter of the i-th type of control may include operations executed by the following blocks.

At block B331, a reference drag parameter for the i-th type of control is determined.

At block B332, an adjustment parameter corresponding to the reference drag parameter is determined.

In the embodiments of the present disclosure, a drag operation may be performed on the i-th type of control to generate a corresponding reference drag parameter. The reference drag parameters may include at least one of a drag direction, a drag displacement, a drag distance, a drag amplitude, a drag duration, a drag trajectory, a drag endpoint, etc., which are not limited herein.

In the embodiments of the present disclosure, a mapping relationship between the preset drag parameter and adjustment parameter may also be stored in advance. Accordingly, the adjustment parameters corresponding to the reference drag parameter may be determined based on the mapping relationship. The drag parameter may include at least one of a drag direction, a drag displacement, a drag distance, a drag amplitude, a drag duration, a drag trajectory, a drag endpoint, etc., which are not limited herein. As such, the adjustment parameter may be generated based on the drag operation, which helps improve the flexibility of window adjustment and also facilitates the efficiency of batch window adjustment.

At block 304, a corresponding control of the Q windows is adjusted based on the adjustment parameter to obtain adjusted Q windows.

In the embodiments of the present disclosure, the corresponding control of the Q windows may be adjusted based on the adjustment parameter to obtain the adjusted Q windows, and the adjusted Q windows may further be displayed.

In the embodiments of the present disclosure, the scenario-differentiated free window mode has good scalability and reusability, avoids the frequent addition of window types for different scenarios, enables capability reuse, and may accommodate various business scenarios. For subsequent new business scenario requirements, based on the capability foundation of the free window mode, the requirements may be fulfilled with only a small amount of configuration and function customization, thereby significantly reducing development and maintenance costs.

For developers, being able to adjust windows of different window modes under the free window mode is helpful in improving development efficiency.

In some embodiments, the method may further include operations executed by the following blocks.

At block A1, a target product form of the electronic device is determined.

At block A2, whether the target product form supports the free window mode is detected.

At block A3, in a case where the target product form supports the free window mode, a target scenario feature parameter corresponding to the target product form is determined, the target scenario feature parameter being configured to define a control adjustment effect under each window mode.

At block A4, the free window mode is entered based on the target scenario feature parameter.

In the embodiments of the present disclosure, the product form is configured to describe a specific form of the product or the product model. The product form may include at least one of a mobile phone, a tablet, a smartwatch, a notebook computer, a smart TV, etc., which are not limited herein. Alternatively, the product form may include a product model, and different product models correspond to different screen sizes or performance characteristics. The scenario feature parameter may be understood as a parameter configured to define the control adjustment effect under each window mode. For example, an adjustment range of each control may be set. As another example, it may be set which controls may be adjusted and which cannot. A preset mapping relationship between the product form and the scenario feature parameter may be stored in advance.

In specific implementation, the target product form of the electronic device may be determined, and it may further be detected whether the target product form supports the free window mode. When the target product form supports the free window mode, the target scenario feature parameter corresponding to the target product form is determined, and then the free window mode is entered based on the target scenario feature parameter. That is, in the free window mode, the corresponding free window mode may be set based on the product form, which allows targeted adjustment according to the attribute corresponding to the product, and helps improve adjustment efficiency and flexibility.

In the embodiments of the present disclosure, taking the Android system as an example, on the basis of the existing Android window mode, a concept of a scenario (different products correspond to different scenarios) may be added, and a free window implementation manner based on extracted scenario features may be provided. Then, a designated scenario and feature may be launched via an application. In specific implementation, an XML configuration of the scenario combined with scenario features may be configured to support multi-window forms under different scenarios.

In specific implementation, under such a scenario, the window mode of each application remains unchanged, just as in a normal desktop mode. Through scenarios and scenario features, functional differentiation may be achieved, such as free dragging, top-pinning, rounded corners, scaling, embedding, etc.

In the embodiments of the present disclosure, an application may be launched first, and the free window mode may be entered based on the application. Under the free window mode, corresponding scenarios and scenario features may be configured in embedded canvas scenarios or in screen casting, vehicle-mounted, or PC modes, so as to adapt to the needs of different products and different product models within the products.

In the embodiments of the present disclosure, taking the Android system as an example, the Android system may support XML parsing of a scenario capability. The XML format may include at least one of a scenario, a scale factor, whether embedding is supported (support Embedded), whether window resizing is supported (support Resize), corner radius, etc., which are not limited herein.

Furthermore, in a system that supports the scenario capability, the scenario that is set and scenario features may further be recorded into a task stack (Task) of the application during application startup. Accordingly, depending on the application and the different startup modes, the window may be started in a mode such as the Activity Embedding, the split-screen, the floating window, etc., based on the original features of the application. Furthermore, the characteristics of the corresponding scenario may be configured to realize differentiated scenario processing, such as setting rounded corners, scaling, embedding, etc.

In practical application, as the application scenarios of Android become increasingly extensive, such as in vehicle-mounted systems, PC scenarios, etc., the window modes in related technologies cannot adapt to innovative multi-window service scenarios such as vehicle-mounted systems, PC scenarios, screen casting, and canvas embedding. However, in the embodiments of the present disclosure, the corresponding free window mode may be determined based on the product form, and different window modes may be adjusted simultaneously based on the free window mode, which helps to improve the efficiency of window adjustment.

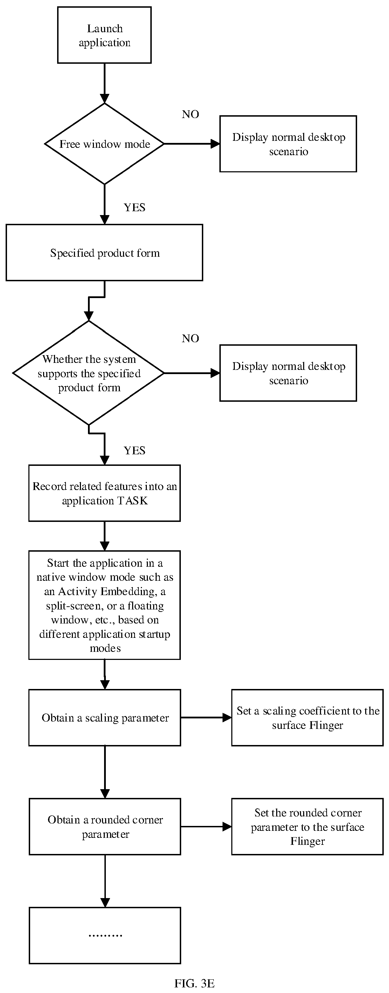

As an example, as shown in FIG. 3E, an application (such as a window editing application) is launched. It is detected whether a free window mode exists. If not, a normal desktop scenario is displayed. If yes, a specified product form is obtained, and it is detected whether the system supports the specified product form. If not, the normal desktop scenario is displayed. If yes, related features are recorded into an application task stack (TASK), and the application is started in a native window mode such as an Activity Embedding, a split-screen, or a floating window, etc., based on different application startup modes. For example, a scaling parameter is obtained, and a scaling coefficient is set in the surface Flinger to implement a scaling operation; a rounded corner parameter is obtained, and specifically, the rounded corner parameter is set in the surface Flinger; and other window adjustments may also be implemented.

In some embodiments, after the above block 304, adjusting the corresponding control of the Q windows based on the adjustment parameter to obtain the adjusted Q windows, the method may further include operations executed by the following blocks.

At block B1, display parameters of the Q windows are determined, and Q display parameters are obtained.

At block B2, the Q windows are displayed based on the Q display parameters.

In the embodiments of the present disclosure, the display parameter may include at least one of a display priority, a display position, a display area, a display batch, etc., which are not limited herein.

In specific implementation, only the Q windows may be displayed, or in addition to the Q windows, the other windows in the P windows (other than the Q windows) may also be displayed.

In specific implementation, the display parameter of each window of the Q windows may be determined to obtain the Q display parameters, and then the Q windows may be displayed based on the Q display parameters.

It can be seen that the window adjustment method described in the embodiments of the present disclosure, applied to an electronic device, displays P windows in a free window mode, each window corresponding to one window mode and at least one application, where P is a positive integer, and the free window mode is configured to be compatible with two or more window modes. Q windows are selected from the P windows, where Q is a positive integer less than or equal to P. An adjustment parameter of the Q windows is determined, the adjustment parameter being configured to adjust one or more functions of a type of control, or to adjust one or more functions of any adjustable control of the Q windows. A corresponding control in the Q windows is adjusted based on the adjustment parameter to obtain adjusted Q windows. On one hand, in the free window mode, multiple windows may be compatible with or displayed simultaneously, each window corresponding to one window mode or at least one application. On the other hand, one or more functions of a type of control in the windows, or one or more functions of any control, may be adjusted, which helps improve the efficiency and flexibility of window adjustment.

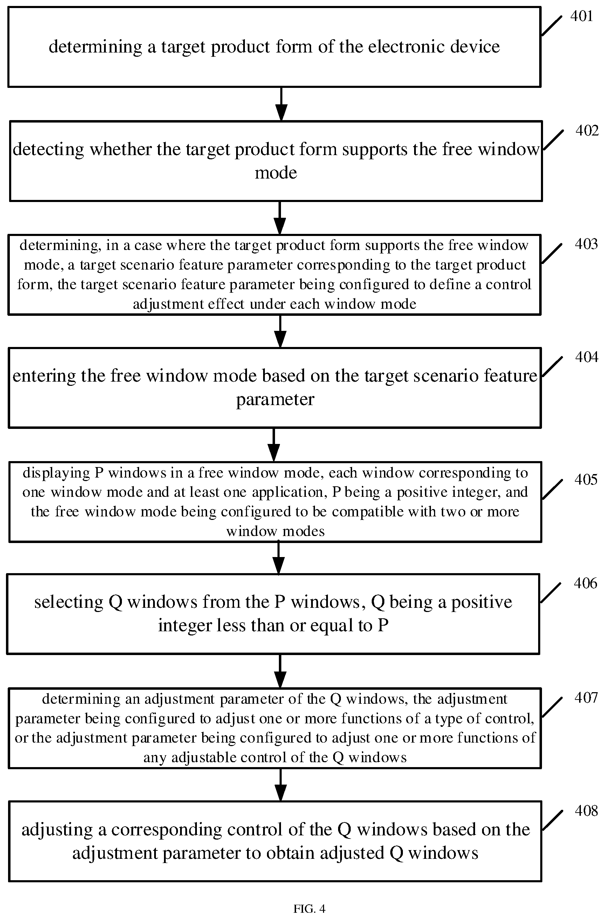

Consistent with the embodiments shown in FIG. 3A, as shown in FIG. 4, FIG. 4 is another window adjustment method provided in some embodiments of the present disclosure, applied to the electronic device as shown in FIG. 1 or FIG. 2. The method specifically includes operations executed by the following blocks.

At block A401, a target product form of the electronic device is determined.

At block A402, whether the target product form supports the free window mode is detected.

At block A403, in a case where the target product form supports the free window mode, a target scenario feature parameter corresponding to the target product form is determined, the target scenario feature parameter being configured to define a control adjustment effect under each window mode.

At block A404, the free window mode is entered based on the target scenario feature parameter.

At block 405, in a free window mode, P windows are displayed, each window corresponding to one window mode and at least one application, P being a positive integer, and the free window mode being configured to be compatible with two or more window modes.

At block 406, Q windows are selected from the P windows, Q being a positive integer less than or equal to P.

At block 407, an adjustment parameter of the Q windows is determined, the adjustment parameter being configured to adjust one or more functions of a type of control, or the adjustment parameter being configured to adjust one or more functions of any adjustable control of the Q windows.

At block 408, a corresponding control of the Q windows is adjusted based on the adjustment parameter to obtain adjusted Q windows.

The specific descriptions of the above blocks 401 to 408 may refer to the related descriptions of the window adjustment method described in FIG. 3A, and will not be repeated here.

It can be seen that the window adjustment method described in the embodiments of the present disclosure, applied to an electronic device, determines the target product form of the electronic device, detects whether the target product form supports the free window mode, and, when the target product form supports the free window mode, determines a target scenario feature parameter corresponding to the target product form. The target scenario feature parameter is configured to define a control adjustment effect under each window mode. Based on the target scenario feature parameter, the free window mode is entered. In the free window mode, P windows are displayed, each corresponding to one window mode and at least one application, where P is a positive integer. The free window mode is configured to be compatible with two or more window modes. Q windows are selected from the P windows, where Q is a positive integer less than or equal to P. An adjustment parameter of the Q windows is determined, the adjustment parameter being used to adjust one or more functions of a type of control, or to adjust one or more functions of any adjustable control of the Q windows. A corresponding control in the Q windows is adjusted based on the adjustment parameter to obtain adjusted Q windows. On one hand, in the free window mode, multiple windows may be compatible with or displayed simultaneously, each window corresponding to one window mode or at least one application. On the other hand, one or more functions of a type of control in the windows, or one or more functions of any control, may be adjusted, which helps to improve the efficiency and flexibility of window adjustment.

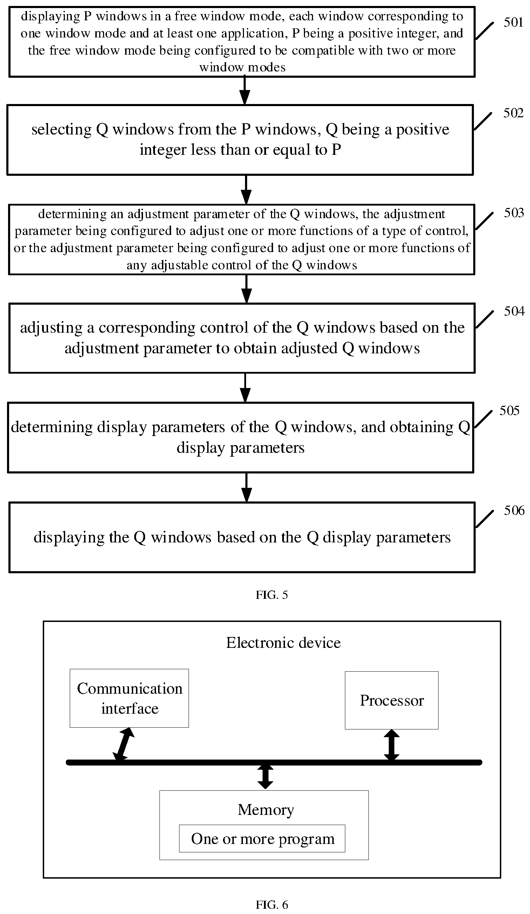

Consistent with the embodiments shown in FIG. 3A, as shown in FIG. 5, FIG. 5 is a schematic flowchart of a window adjustment method provided in some embodiments of the present disclosure, applied to the electronic device as shown in FIG. 1 or FIG. 2. As shown in the figure, the window adjustment method includes operations executed by the following blocks.

At block 501, in a free window mode, P windows are displayed, each window corresponding to one window mode and at least one application, P being a positive integer, and the free window mode being configured to be compatible with two or more window modes.

At block 502, Q windows are selected from the P windows, Q being a positive integer less than or equal to P.

At block 503, an adjustment parameter of the Q windows is determined, the adjustment parameter being configured to adjust one or more functions of a type of control, or the adjustment parameter being configured to adjust one or more functions of any adjustable control of the Q windows.

At block 504, a corresponding control of the Q windows is adjusted based on the adjustment parameter to obtain adjusted Q windows.

At block 505, display parameters of the Q windows are determined, and Q display parameters are obtained.

At block 506, the Q windows are displayed based on the Q display parameters.

The specific descriptions of the above blocks 501 to 506 may refer to the related descriptions of the window adjustment method described in FIG. 3A and will not be repeated here.

It can be seen that the window adjustment method described in the embodiments of the present disclosure, applied to an electronic device, displays P windows in a free window mode, each window corresponding to one window mode and at least one application, where P is a positive integer. The free window mode is configured to be compatible with two or more window modes. Q windows are selected from the P windows, where Q is a positive integer less than or equal to P. An adjustment parameter for the Q windows is determined, the adjustment parameter being configured to adjust one or more functions of a type of control, or to adjust one or more functions of any adjustable control of the Q windows. A corresponding control in the Q windows is adjusted based on the adjustment parameter to obtain the adjusted Q windows. Then, display parameters of the Q windows are determined to obtain Q display parameters, and the Q windows are displayed based on the Q display parameters. On one hand, in the free window mode, multiple windows may be compatible with or displayed simultaneously, each window corresponding to one window mode or at least one application. On the other hand, one or more functions of a type of control in the windows, or one or more functions of any control, may be adjusted. Furthermore, the adjusted windows may be visually displayed, which helps improve the efficiency and flexibility of window adjustment.

Consistent with the above embodiments, as shown in FIG. 6. FIG. 6 is a schematic structural view of an electronic device provided in some embodiments of the present disclosure. As shown in the figure, the electronic device includes a processor, a memory, a communication interface, and one or more programs. The one or more programs are stored in the memory and are configured to be executed by the processor. In the embodiments of the present disclosure, the programs include an instruction for executing the following operations.

In a free window mode, P windows are displayed, each window corresponding to one window mode and at least one application, P being a positive integer, and the free window mode being configured to be compatible with two or more window modes.

Q windows are selected from the P windows, Q being a positive integer less than or equal to P.

An adjustment parameter of the Q windows is determined, the adjustment parameter being configured to adjust one or more functions of a type of control, or the adjustment parameter being configured to adjust one or more functions of any adjustable control of the Q windows.

A corresponding control of the Q windows is adjusted based on the adjustment parameter to obtain adjusted Q windows.

In some embodiments, in the aspect of selecting Q windows from the P windows, the program includes instructions for executing the following operations.

A touch parameter for the Q windows in the P windows is received within a preset time period.

Whether the touch parameter meets a preset condition is detected.

In a case where the touch parameter meets the preset condition, the Q windows in the P windows are determined.

In some embodiments, in the aspect of determining the adjustment parameter of the Q windows, the program includes instructions for executing the following operations.

A target control of the Q windows is selected, where the target control is any adjustable control of the Q windows.

The target control is adjusted to an editing state.

An adjustment parameter of the target control is determined.

In some embodiments, in the aspect of determining the adjustment parameter of the target control, the program includes instructions for executing the following operations.

A target drag parameter for the target control is determined.

An adjustment parameter of the target control corresponding to the target drag parameter is determined.

In some embodiments, in the aspect of determining the adjustment parameter of the Q windows, the program includes instructions for executing the following operations.

Controls in the Q windows is classified to obtain m types of controls.

An i-th type of control is selected from the m types of controls, the i-th type of control being any type among the m types of controls.

An adjustment parameter of the i-th type of control is determined.

In some embodiments, the program includes instructions for executing the following operations.

A target product form of the electronic device is determined.

Whether the target product form supports the free window mode is detected.

In a case where the target product form supports the free window mode, a target scenario feature parameter corresponding to the target product form is determined, the target scenario feature parameter being configured to define a control adjustment effect under each window mode.

The free window mode is entered based on the target scenario feature parameter.

In some embodiments, after adjusting the corresponding control of the Q windows based on the adjustment parameter to obtain the adjusted Q windows, the program includes instructions for executing the following operations.

Display parameters of the Q windows are determined, and Q display parameters are obtained.

The Q windows are displayed based on the Q display parameters.

It can be seen that the electronic device described in the embodiments of the present disclosure, displays P windows in a free window mode, each window corresponding to one window mode and at least one application, where P is a positive integer, and the free window mode is configured to be compatible with two or more window modes. Q windows are selected from the P windows, where Q is a positive integer less than or equal to P. An adjustment parameter of the Q windows is determined, the adjustment parameter being configured to adjust one or more functions of a type of control, or to adjust one or more functions of any adjustable control of the Q windows. A corresponding control in the Q windows is adjusted based on the adjustment parameter to obtain adjusted Q windows. On one hand, in the free window mode, multiple windows may be compatible with or displayed simultaneously, each window corresponding to one window mode or at least one application. On the other hand, one or more functions of a type of control in the windows, or one or more functions of any control, may be adjusted, which helps improve the efficiency and flexibility of window adjustment.

The above describes the embodiment of the present disclosure mainly from the perspective of the execution process of the method side. It can be understood that, in order to implement the above functions, the electronic device includes corresponding hardware structures and/or software modules for performing each function. Those skilled in the art will readily appreciate that the units and algorithm steps described in the embodiments provided herein may be implemented in hardware, or in a combination of hardware and computer software. Whether a particular function is implemented purely by hardware or by software driving hardware depends on the specific application and design constraints of the technical solution. A professional technician may adopt different approaches for implementing the described functions depending on the particular application, but such implementations should not be regarded as beyond the scope of the present disclosure.

In the embodiments of the present disclosure, the electronic device may be divided into functional units according to the above method embodiment. For example, each function may correspond to a separate functional unit, or two or more functions may be integrated into one processing unit. The above integrated units may be implemented in the form of hardware or in the form of software functional units. It should be noted that the division of units in the embodiments of the present disclosure is illustrative and merely represents a logical division of functions. In actual implementation, other division methods may be adopted.

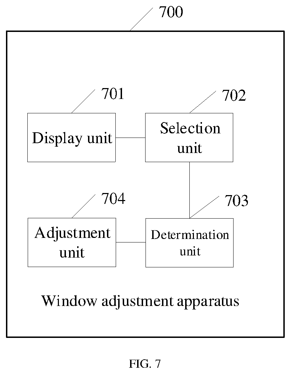

FIG. 7 is a block diagram of a functional unit of a window adjustment apparatus 700 provided in some embodiments of the present disclosure. The apparatus 700 includes a display unit 701, a selection unit 702, a determination unit 703, and an adjustment unit 704.

The display unit 701 is configured to display P windows in a free window mode, each window corresponding to one window mode and at least one application, P being a positive integer, and the free window mode being configured to be compatible with two or more window modes.

The selection unit 702 is configured to select Q windows from the P windows, Q being a positive integer less than or equal to P.

The determination unit 703 is configured to determine an adjustment parameter of the Q windows, the adjustment parameter being configured to adjust one or more functions of a type of control, or the adjustment parameter being configured to adjust one or more functions of any adjustable control of the Q windows.

The adjustment unit 704 is configured to adjust a corresponding control of the Q windows based on the adjustment parameter to obtain adjusted Q windows.

In some embodiments, in the aspect of selecting Q windows from the P windows, the selection unit 702 is configured to:
receive a touch parameter for the Q windows in the P windows within a preset time period;
detect whether the touch parameter meets a preset condition;
determine, in a case where the touch parameter meets the preset condition, the Q windows in the P windows.

In some embodiments, in the aspect of determining the adjustment parameter of the Q windows, the determination unit 703 is configured to:
select a target control of the Q windows, where the target control is any adjustable control of the Q windows;
adjust the target control to an editing state;
determine an adjustment parameter of the target control;

In some embodiments, in the aspect of determining the adjustment parameter of the target control, the determination unit 703 is configured to:
determine a target drag parameter for the target control;
determine an adjustment parameter of the target control corresponding to the target drag parameter;

In some embodiments, in the aspect of determining the adjustment parameter of the Q windows, the determination unit 703 is configured to:
classify controls in the Q windows to obtain m types of controls;
select an i-th type of control from the m types of controls, the i-th type of control being any type among the m types of controls;
determine an adjustment parameter of the i-th type of control.

In some embodiments, the apparatus 700 is further configured to:
determine a target product form of the electronic device;
detect whether the target product form supports the free window mode;
determine, in a case where the target product form supports the free window mode, a target scenario feature parameter corresponding to the target product form, the target scenario feature parameter being configured to define a control adjustment effect under each window mode;
enter the free window mode based on the target scenario feature parameter.

In some embodiments, after adjusting the corresponding control of the Q windows based on the adjustment parameter to obtain the adjusted Q windows, the apparatus 700 is further configured to:
determine display parameters of the Q windows, and obtain Q display parameters;
display the Q windows based on the Q display parameters.

It can be seen that the window adjustment apparatus described in the embodiments of the present disclosure, applied to an electronic device, displays P windows in a free window mode, each window corresponding to one window mode and at least one application, where P is a positive integer, and the free window mode is configured to be compatible with two or more window modes. Q windows are selected from the P windows, where Q is a positive integer less than or equal to P. An adjustment parameter of the Q windows is determined, the adjustment parameter being configured to adjust one or more functions of a type of control, or to adjust one or more functions of any adjustable control of the Q windows. A corresponding control in the Q windows is adjusted based on the adjustment parameter to obtain adjusted Q windows. On one hand, in the free window mode, multiple windows may be compatible with or displayed simultaneously, each window corresponding to one window mode or at least one application. On the other hand, one or more functions of a type of control in the windows, or one or more functions of any control, may be adjusted, which helps improve the efficiency and flexibility of window adjustment.

It should be noted that the electronic device described in the embodiments of the present disclosure is presented in the form of functional units. The term "unit" used herein should be understood in its broadest possible sense. The entity for implementing the function described for each "unit" may be, for example, an application-specific integrated circuit (ASIC), a single circuit, a processor (shared, dedicated, or part of a chipset) and memory configured to execute one or more software or firmware programs, a combinational logic circuit, and/or other suitable components for implementing the described function.

The display unit 701, selection unit 702, determination unit 703, and adjustment unit 704 may be a processor or a display screen. The processor may be an artificial intelligence chip, NPU, CPU, GPU, etc., which are not limited herein. Based on the above units or modules, the functions or steps of any of the methods described above may be implemented.

The present embodiment further provides a chip, which may be configured to implement any of the methods in the above embodiments.

The present embodiment further provides a computer-readable storage medium. The computer-readable storage medium stores a computer program for electronic data exchange, and the computer program enables a computer to execute the embodiments of the present disclosure to implement any of the methods in the above embodiments.

The present embodiment further provides a computer program product, which, when run on a computer, enables the computer to perform the related steps described above to implement any of the methods in the above embodiments.

In addition, the embodiments of the present disclosure further provides a window adjustment apparatus, which may be a chip, component, or module. The apparatus may include a processor and a memory that are connected. The memory is configured to store computer-executable instructions, and when the apparatus is running, the processor may execute the computer-executable instructions stored in the memory to cause the chip to perform any of the methods in the above method embodiments.

The electronic device, computer storage medium, computer program product, or chip provided in the embodiments of the present disclosure are all configured to execute the corresponding methods described above. Therefore, the advantageous effects they may achieve can be referred to in the advantageous effects of the corresponding methods provided above and will not be repeated here.

Through the description of the above embodiments, those skilled in the art can understand that, for the sake of convenience and brevity of description, only the functional module division mentioned above is used as an example. In practical applications, the described functions may be assigned to different functional modules as needed, that is, the internal structure of the device may be divided into different functional modules to complete all or part of the functions described above.

In several embodiments provided in the present disclosure, it should be understood that the disclosed apparatus and methods may be implemented in other ways. For example, the apparatus embodiments described above are merely illustrative. The division of modules or units is merely a logical functional division. In actual implementation, other division methods may be adopted. For example, multiple units or components may be combined or integrated into another device, or some features may be omitted or not performed. Additionally, the coupling or direct coupling or communication connection between elements shown or discussed may be an indirect coupling or communication connection through some interfaces, devices, or units, and may be in electrical, mechanical, or other forms.

The units described as separate components may or may not be physically separate. The components shown as units may be one physical unit or multiple physical units, i.e., they may be located in one place or distributed across multiple different places. Some or all of the units may be selected as needed to achieve the purpose of the present embodiment.

In addition, in each embodiment of the present disclosure, the various functional units may be integrated into one processing unit, or each unit may physically exist separately, or two or more units may be integrated into one unit. The above integrated units may be implemented in the form of hardware or in the form of software functional units.

When the integrated unit is implemented in the form of a software functional unit and sold or used as an independent product, it may be stored in a readable storage medium. Based on this understanding, the technical solutions in the embodiments of the present disclosure, whether essentially or partially contributing to the prior art, may be embodied as a software product. The software product is stored in a storage medium and includes several instructions to enable a device (which may be a microcontroller, chip, etc.) or a processor to execute all or part of the steps of the methods in the embodiments of the present disclosure. The aforementioned storage media include a USB flash drive, a mobile hard disk, a read-only memory (ROM), a random access memory (RAM), a magnetic disk, an optical disk, and various media capable of storing program code.

The above content is merely specific embodiments of the present disclosure, and the scope of protection of the present disclosure is not limited thereto. Any modifications or replacements easily conceived by those skilled in the art within the technical scope disclosed by the present disclosure should be included within the scope of protection of the present disclosure. Therefore, the scope of protection of the present disclosure should be subject to the scope of the claims.

## Claims

1. A window adjustment method, applied to an electronic device and comprising:
displaying P windows in a free window mode, each window corresponding to one window mode and at least one application, P being a positive integer, and the free window mode being configured to be compatible with two or more window modes;
selecting Q windows from the P windows, Q being a positive integer less than or equal to P;
determining an adjustment parameter of the Q windows, the adjustment parameter being configured to adjust one or more functions of a type of control, or the adjustment parameter being configured to adjust one or more functions of any adjustable control of the Q windows;
adjusting a corresponding control of the Q windows based on the adjustment parameter to obtain adjusted Q windows.

2. The window adjustment method according to claim 1, wherein the selecting Q windows from the P windows, comprises:
receiving a touch parameter for the Q windows in the P windows within a preset time period;
detecting whether the touch parameter meets a preset condition;
determining, in a case where the touch parameter meets the preset condition, the Q windows in the P windows.

3. The window adjustment method according to claim 1 or 2, wherein the determining the adjustment parameter of the Q windows, comprises:
selecting a target control of the Q windows, the target control being any adjustable control of the Q windows;
adjusting the target control to an editing state;
determining an adjustment parameter of the target control.

4. The window adjustment method according to claim 3, wherein the determining the adjustment parameter of the target control, comprises:
determining a target drag parameter for the target control;
determining an adjustment parameter of the target control corresponding to the target drag parameter.

5. The window adjustment method according to claim 1 or 2, wherein the determining the adjustment parameter of the Q windows, comprises:
classifying controls in the Q windows to obtain m types of controls;
selecting an i-th type of control from the m types of controls, the i-th type of control being any type among the m types of controls;
determining an adjustment parameter of the i-th type of control.

6. The window adjustment method according to claim 1 or 2, wherein the method further comprises:
determining a target product form of the electronic device;
detecting whether the target product form supports the free window mode;
determining, in a case where the target product form supports the free window mode, a target scenario feature parameter corresponding to the target product form, the target scenario feature parameter being configured to define a control adjustment effect under each window mode;
entering the free window mode based on the target scenario feature parameter.

7. The window adjustment method according to claim 1 or 2, wherein after adjusting the corresponding control of the Q windows based on the adjustment parameter to obtain the adjusted Q windows, the method further comprises:
determining display parameters of the Q windows, and obtaining Q display parameters;
displaying the Q windows based on the Q display parameters.

8. A window adjustment apparatus, applied to an electronic device, and the apparatus comprising: a display unit, a selection unit, a determination unit, and an adjustment unit,
the display unit being configured to display P windows in a free window mode, each window corresponding to one window mode and at least one application, P being a positive integer, and the free window mode being configured to be compatible with two or more window modes;
the selection unit being configured to select Q windows from the P windows, Q being a positive integer less than or equal to P;
the determination unit being configured to determine an adjustment parameter of the Q windows, the adjustment parameter being configured to adjust one or more functions of a type of control, or the adjustment parameter being configured to adjust one or more functions of any adjustable control among the Q windows;
the adjustment unit being configured to adjust a corresponding control of the Q windows based on the adjustment parameter to obtain adjusted Q windows.

9. The window adjustment apparatus according to claim 8, wherein in the aspect of selecting Q windows from the P windows, the selection unit is configured to:
receive a touch parameter for the Q windows in the P windows within a preset time period;
detect whether the touch parameter meets a preset condition;
determine, in a case where the touch parameter meets the preset condition, the Q windows in the P windows.

10. The window adjustment apparatus according to claim 8 or 9, wherein in the aspect of determining the adjustment parameter of the Q windows, the determination unit is configured to:
select a target control of the Q windows, the target control being any adjustable control of the Q windows;
adjust the target control to an editing state;
determine an adjustment parameter of the target control.

11. The window adjustment apparatus according to claim 10, wherein in the aspect of determining the parameter of the target control, the determination unit is configured to:
determine a target drag parameter for the target control;
determine an adjustment parameter of the target control corresponding to the target drag parameter.

12. The window adjustment apparatus according to claim 8 or 9, wherein in the aspect of determining the parameter of the target control, the determination unit is configured to:
classify controls in the Q windows to obtain m types of controls;
select an i-th type of control from the m types of controls, the i-th type of control being any type among the m types of controls;
determine an adjustment parameter of the i-th type of control.

13. The window adjustment apparatus according to claim 8 or 9, wherein the apparatus is further configured to:
determine a target product form of the electronic device;
detect whether the target product form supports the free window mode;
determine, in a case where the target product form supports the free window mode, a target scenario feature parameter corresponding to the target product form, the target scenario feature parameter being configured to define a control adjustment effect under each window mode;
enter the free window mode based on the target scenario feature parameter.

14. The window adjustment apparatus according to claim 8 or 9, wherein after adjusting the corresponding control of the Q windows based on the adjustment parameter to obtain the adjusted Q windows, the apparatus is further configured to:
determining display parameters of the Q windows, and obtaining Q display parameters;
displaying the Q windows based on the Q display parameters.

15. An electronic device, comprising a processor and a memory, the process being configured to store one or more programs and being configured to be executed by the processor, the one or more programs comprising an instruction for performing the method in any of the claims 1-7.

16. A computer readable storage medium, storing a computer program for electronic data exchange, wherein the computer program enables a computer to perform the method in any of the claims 1-7.

17. A compute program product, comprising a non-transitory computer-readable storage medium storing a computer program, wherein the computer program is operable to cause the computer to perform the method in any one of claims 1-7.
